# EUROPÄISCHE PATENTSCHRIFT

(11) **EP 1 050 216 B1**
(45) Veröffentlichungstag und Bekanntmachung des Hinweises auf die Patenterteilung: **13.10.2004**
(21) Anmeldenummer: 00108236.1
(22) Anmeldetag: 14.04.2000
(51) Int. Cl.: A23G 3/20, A23P 1/08

(54) **Vorrichtung zum Überziehen von Nahrungsmitteln mit kakaobutterhaltigen oder ähnlichen fetthaltigen Massen**
Apparatus for coating foodstuffs with cacao-butter containing or like fat containing masses
Appareil pour enrober des aliments avec des masses contenant du beurre de cacao ou des masses similaire contenant de la graisse

(30) Priorität: 04.05.1999 DE 29907948 U
(43) Veröffentlichungstag der Anmeldung: 08.11.2000
(73) Patentinhaber: Hosokawa Kreuter GmbH, 22419 Hamburg (DE)
(72) Erfinder: Mamerow, Bernd, 22359 Hamburg (DE)
(74) Vertreter: von Raffay, Vincenz, Dipl.-Ing.

(56) Entgegenhaltungen:
- DE-A1- 4 241 610
- DE-C1- 3 734 626
- DE-C1- 3 839 440

## Beschreibung

Die Erfindung betrifft eine Vorrichtung nach dem Oberbegriff des Anspruches 1.

Eine Vorrichtung dieser Art, die auch als Schokolade-Überziehmaschine bezeichnet wird, ist aus der DE-PS 38 39 440 bekannt. Bei dieser bekannten Vorrichtung sind die Querstreben an Längsstäben befestigt, so daß sämtliche Querstreben gemeinsam auf- und abbewegt werden. Die Auf- und Abbewegung der Querstreben erfolgt dadurch, daß die Längsstäbe, an denen sie befestigt sind, auf- und abbewegt werden. Zu diesem Zweck sind die Längsstäbe an einem Ende schwenkbar gelagert und an dem anderen Ende durch als Zahnräder ausgebildete Rüttelräder auf- und abbewegbar. Sie übernehmen damit sowohl die Aufwärtsbewegung als auch das Abbremsen (Aufschlag).

Die bewegte Masse ist bei dieser bekannten Vorrichtung sehr groß und entsprechend träge. Eine individuelle Einstellung ist nicht möglich, da nur die Amplitude oder der Hub für sämtliche Querstreben gemeinsam verstellt werden kann, und Hub und Drehzahl voneinander abhängig sind.

Der Erfindung liegt nun die Aufgabe zugrunde, eine Vorrichtung der eingangs genannten Art zu schaffen, bei der die zum Rütteln bewegten Massen stark verringert werden, und eine verbesserte und individuellere Einstellmöglichkeit besteht.

Die Aufgabe wird durch das Kennzeichen des Anspruches 1 grundsätzlich gelöst.

Eine besonders vorteilhafte Ausführungsform ist Gegenstand des Anspruches 2.

Dadurch, daß die Querstreben einzeln gelagert sind, können sie unabhängig voneinander auf- und abbewegt werden, um das Rütteln des Gitterbandes durchzuführen. Die einzelne Querstrebe weist bei gleicher Festigkeit in Hub- als auch Gitterbandrichtung eine geringe Masse auf, so daß sie entsprechend leicht beschleunigt und bewegt werden kann. Der Rüttelhub und die Amplitude der Bewegung jeder Querstrebe ist einzeln ein- bzw. verstellbar.

Dadurch, daß die Rüttelbewegung, d.h. die Aufwärtsbewegung von Exzenterscheiben durchgeführt wird, diese nach Erreichen des höchsten Punktes einen freien Fall ermöglichen, und das Abbremsen von Aufschlagplatten übernommen wird, wie in Anspruch 2 angegeben, ist sichergestellt, daß bei jeder Umdrehung der Exzenterscheibe eine volle Rüttelamplitude durchgeführt wird. Dieses ist bei Zahnrädern, bei denen die einzelnen Zähne sehr schnell aufeinanderfolgen, insbesondere bei schnellem Umlauf, nicht gewährleistet.

Der durch die Exzenterkurve der Exzenterscheiben vorgegebene Hub wird in vorteilhafter Weise durch Stößel auf die Querstreben übertragen. Hierdurch ist es möglich, die Exzenterscheiben unterhalb der Rückführung des Gitterbandes anzuordnen (Anspruch 3).

Wenn die Vorrichtung so ausgebildet ist, wie in Anspruch 4 unter Schutz gestellt, dann wird die Feder des teleskopartig ausgebildeten Stößels bei der Aufwärtsbewegung gespannt, ohne daß diese hierdurch beeinträchtigt wird. Bei der Abwärtsbewegung entspannt sich die Feder und unterstützt damit den freien Fall, so daß der Schlag der Rüttelung verstärkt wird.

Weitere vorteilhafte Ausgestaltungen sind Gegenstand der Ansprüche 5 bis 7.

Im folgenden wird die Erfindung unter Hinweis auf die Zeichnung anhand eines Ausführungsbeispieles näher erläutert.

Es zeigt:
- Fig. 1: eine Seitenansicht der wesentlichen Teile einer Schokolade-Überziehmaschine mit Rüttelvorrichtung;
- Fig. 2: eine Seitenansicht der Rüttelvorrichtung der Fig. 1 im vergrößerten Maßstab;
- Fig. 3: einen Querschnitt durch die Darstellung der Fig. 2 in einer Ebene, in der sich eine Querstrebe mit den die Rüttelbewegung durchführenden Bauteilen befindet; und
- Fig. 4: einen Querschnitt durch eine Ebene, in der sich der Verstellmechanismus für die Rüttelvorrichtung befindet.

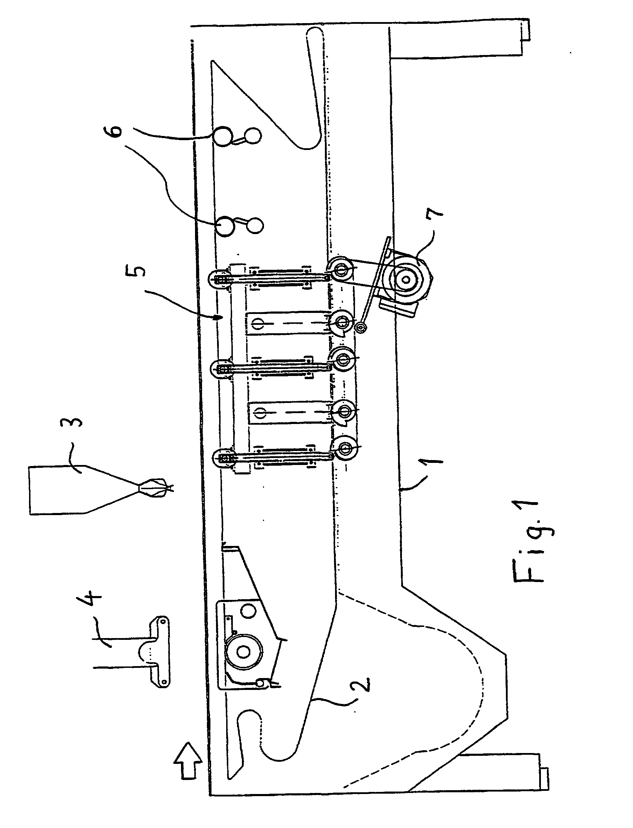

In Fig. 1 ist eine Schokolade-Überziehmaschine dargestellt, bei der die zu überziehenden Artikel, beispielsweise Kekse, auf der linken Seite einlaufen. In dem Gestell 1 bewegt sich ein endloses Gitterband 2 von dem linken Einlauf zum rechten Auslauf. Anschließend an den Einlauf ist eine Überziehstation 4 vorgesehen, auf die in Förderrichtung ein Gebläse 3 folgt. Unterhalb der Überziehstation 4 befindet sich eine Bodenmulde zum Auftragen der überschüssigen Schokolade auf die Unterseite der Kekse.

In Förderrichtung im Anschluß an die Bodenmulde ist eine Rüttelvorrichtung 5 vorgesehen, die durch einen Motor 7 angetrieben wird. Bodenabstreichwalzen am Förderende sind mit 6 bezeichnet.

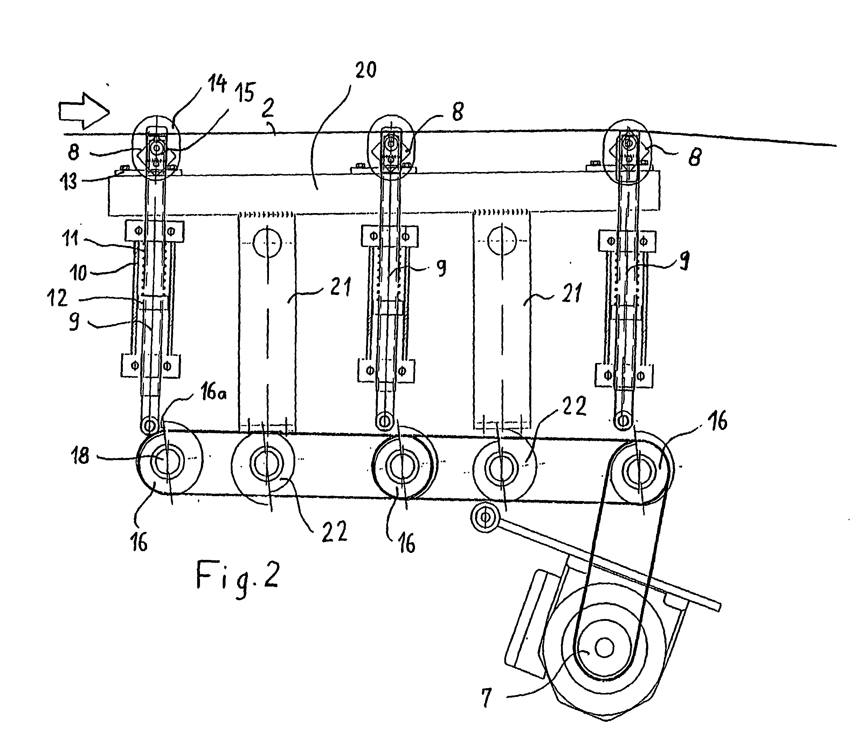

Die in Fig. 1 schematisch dargestellte Rüttelvorrichtung 5 ist in Fig. 2 im größeren Maßstab veranschaulicht. Die Rüttelvorrichtung besteht aus Querstreben 8, die unterhalb des Gitterbandes quer zur Förderrichtung verlaufen. Sie weisen bei dieser Ausführungsform einen quadratischen Querschnitt auf. Wie aus Fig. 2 erkennbar, stehen die Rohre mit quadratischem Querschnitt, die die Gitterstreben 8 bilden, auf der Spitze, so daß eine kleine Kontaktfläche zum Gitterband entsteht. An den Enden der Querstreben sind Ablaufbleche 14 vorgesehen, die dafür sorgen, daß gegebenenfalls überschüssige Schokolade zurück in den Kreislauf gelangen kann.

Unterhalb des Rücklaufs des Gitterbandes 2 (s. Fig. 1) befinden sich Nockenscheiben 16, von denen jeweils zwei auf einer gemeinsamen Welle 18 angeordnet sind. Die Nockenscheiben führen bei einer Umdrehung eine Auf- und Abbewegung eines Stößels 9,10 durch. Dieser Stößel besteht aus einer Stößelstange 9 und einer Führung 10 in Form eines Rohres, das an dem Gestell 1 befestigt ist. In dem die Führung 10 bildenden Rohr ist eine Feder 11 angeordnet, die sich zwischen einem Abschnitt größeren Durchmessers 12 der Stößelstange 9 und einem oben liegenden Abschnitt, der mit der Führung 10 verbunden ist, abstützt.

Bei der dargestellten Ausführungsform sind drei Querstreben 8 vorgesehen. Selbstverständlich können auch eine größere Anzahl vorgesehen sein. Zu jeder Querstrebe gehören zwei Nockenscheiben16 mit jeweils einem Stößel 9,10.

Angetrieben werden die Nockenscheiben 16 von dem Antriebsmotor 7, und zwar über Zahnriemen und Riemenscheiben 17 an den Enden der Antriebswellen 18.

Beim Betrachten der Fig. 2 ist ohne weiteres erkennbar, daß die Nocken kurve der Nockenscheiben 16 einen plötzlichen Sprung 16a von dem Punkt zur Durchführung des größten und kleinsten Hubes macht. Bei einer Umdrehung einer Nockenscheiben 16 wird eine Rüttelamplitude durchgeführt.

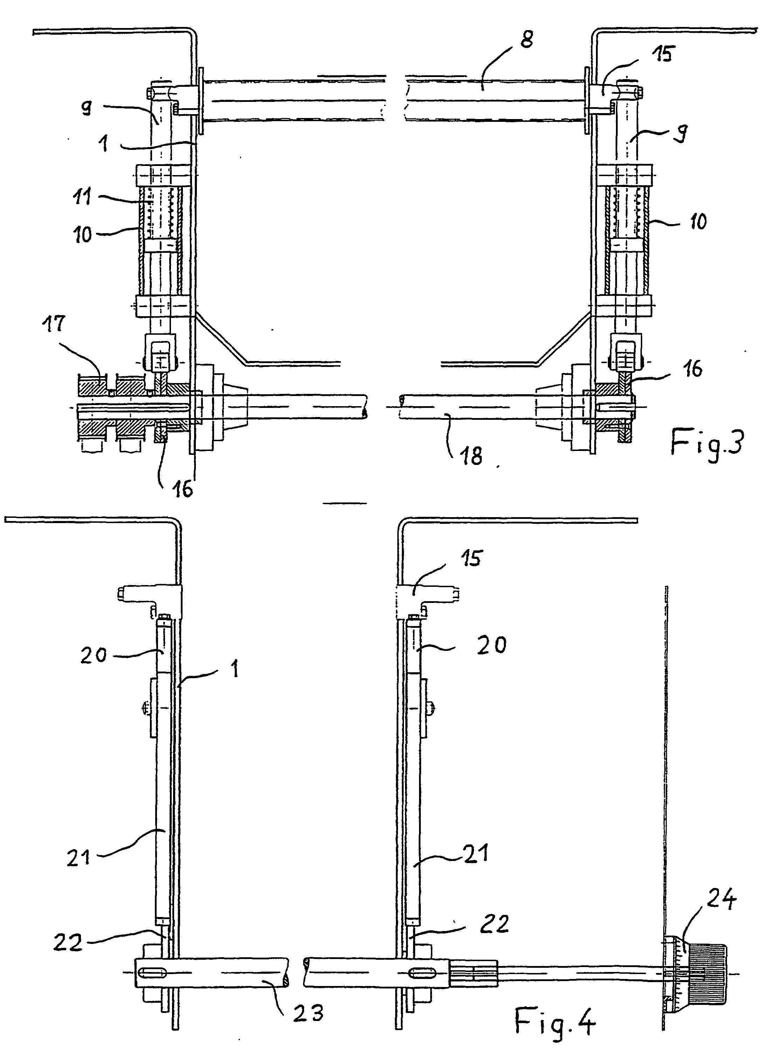

Die Amplitude oder der Hub, den eine Querstrebe 8 durchführen soll, ist einstellbar, und zwar mit Hilfe von Längsbalken 20, von denen zwei vorgesehen sind. Diese Längsbalken sind an Verstellstößeln 21 angeordnet, die mit Hilfe von Exzenterscheiben 22 verstellbar, d.h. auf- und abbewegbar sind. Zu diesem Zweck sind sie an einer gemeinsamen Welle 23 (s. Fig. 4) befestigt. Die Verstellung erfolgt mit Hilfe eines Handrades 24, das entsprechend gedreht werden kann. Je stärker der Verstellstößel 21 angehoben ist, desto geringer ist die Amplitude oder der Hub des Stößels 9,10, d.h. desto später gelangt die entsprechende Rolle am Ende der Stößelstange 9 in Eingriff mit der zugehörigen Nockenscheibe 16.

Auf dem Verstellbalken 20 sind Aufschlagplatten 13 befestigt, auf denen die Querstreben mit ihren Lagerböcken an ihren Enden bei der Abwärtsbewegung aufschlagen.

Jede Querstrebe 8 ist unabhängig von den anderen Querstreben gelagert und auf- und abbewegbar. Für jede Querstrebe sind zwei Stößel 9,10 und zwei Nockenscheiben 16 auf einer Welle 18 vorgesehen. Der Hub oder die Amplitude für jede Querstrebe ist individuell einstellbar, je nach dem, wie weit der zugeordnete Verstellstößel 21 durch die zugehörigen Nockenscheiben 22 durch Drehung des Handgriffes 24 angehoben oder abgesenkt werden. Durch die teleskopartige Ausbildung der Stößel 9,10 wird die Rüttelwirkung verstärkt, da die Feder bei der Abwärtsbewegung für einen zusätzlichen Schlag sorgt.

## Patentansprüche

1. Vorrichtung zum Überziehen von Nahrungsmitteln mit kakaobutterhaltigen oder ähnlichen fetthaltigen Massen, mit einem die zu überziehenden Artikel fördernden Gitterband (2) unterhalb dessen oberen Trum eine Rüttelvorrichtung (5) angeordnet ist, die quer zur Förderrichtung verlaufende, gegen den oberen Trum auf- und abbewegbare Querstreben (8) aufweist, **dadurch gekennzeichnet, daß** die Querstreben (8) außerhalb des Überziehraumes einzeln gelagert und unabhängig voneinander auf- und abbewegbar sind.

2. Vorrichtung nach Anspruch 1, **dadurch gekennzeichnet, daß** für die Auf- und Abbewegung jeder Querstrebe (8) Nockenscheiben (16) vorgesehen sind, die bei jeder Umdrehung eine Rüttelamplitude durchführen, wobei die Exzenterkurve zwischen den Punkten größter und kleinster Amplitude einen Sprung (16a) aufweisen.

3. Vorrichtung nach Anspruch 2, **dadurch gekennzeichnet,**
**daß** die Nockenscheiben (16) für eine Querstrebe (8) unterhalb der Rückführung des Gitterbandes (2) angeordnet und durch eine gemeinsame Antriebswelle (18) verbunden sind, und
**daß** zwischen den Querstreben (8) und den Nockenscheiben (16) Stößel (9,10) angeordnet sind, die den durch die Nockenkurve vorgegebenen Hub auf die zugehörige Querstrebe übertragen.

4. Vorrichtung nach Anspruch 3, **dadurch gekennzeichnet,**
**daß** die Stößel (9,10) als Teleskop mit Feder (11) ausgebildet sind, die bei Aufwärtsbewegung gespannt wird, und sich bei Abwärtsbewegung zur Verstärkung des Schlages entspannt.

5. Vorrichtung nach einem oder mehreren der vorstehenden Ansprüche, **dadurch gekennzeichnet, daß** zur Amplitudenverstellung senkrecht zu den Querstreben (8) verlaufende Verstellbalken (20) vorgesehen sind, auf denen die Querstreben bei ihrer Abwärtsbewegung aufschlagen und die in Richtung des Rüttelhubes verstellbar sind.

6. Vorrichtung nach Anspruch 5, **dadurch gekennzeichnet,**
**daß** auf den Verstellbalken (20) Aufschlagplatten (13) für die Querstreben (8) angebracht sind.

7. Vorrichtung nach Anspruch 5 oder 6, **dadurch gekennzeichnet, daß** die Verstellbalken (20) über Verstellstößel (21) durch Nockenscheiben (22) verstellbar sind.

## Claims

1. Device for coating foods with cocoa butter-containing or similar fatty substances, with a lattice belt (2) conveying the articles to be coated and below whose upper strand is positioned a vibrating device (5), which is provided with cross-braces (8) movable up and down against the upper strand and running transversely to the conveying direction, **characterized in that** the cross-braces (8) are individually mounted outside the coating area and can be moved up and down independently of one another.

2. Device according to claim 1, **characterized in that** for the up and down movement of each cross-brace (8) cam disks (16) are provided which, during each revolution perform a vibrating amplitude, the cam curve between the points of maximum and minimum amplitude having a break (16a).

3. Device according to claim 2, **characterized in that** the cam disks (16) for a cross-brace (8) are positioned below the return of the lattice belt (2) and are connected by a common drive shaft (18) and that between the cross-braces (8) and the cam disks (16) are provided rams (9, 10), which transfer the travel given by the cam curve to the associated cross-brace.

4. Device according to claim 3, **characterized in that** the rams (9, 10) are constructed in telescopic manner with springs (11) which are tensioned during the upward movement and are relaxed during the downward movement in order to reinforce the impact.

5. Device according to one or more of the preceding claims, **characterized in that** for adjusting the amplitude, adjusting beams (20) running perpendicular to the cross-braces (8) are provided and against which strike the cross-braces during their downward movement and which are adjustable in the direction of the vibration travel.

6. Device according to claim 5, **characterized in that** impact plates (13) for the cross-braces (8) are fitted to the adjusting beams (20).

7. Device according to claim 5 or 6, **characterized in that** the adjusting beams (20) are adjustable by cam disks (22) via adjusting rams (21).

## Revendications

1. Dispositif destiné à l'enrobage de produits alimentaires constitués de masses contenant du beurre de cacao ou de masses similaires contenant des matières grasses, comportant une bande à grille (2) transportant les articles à enrober, sous le brin supérieur de laquelle est placé un dispositif vibreur (5), qui est muni d'entretoises transversales (8) s'étendant transversalement au sens du transport et pouvant être déplacées vers le haut et vers le bas contre le brin supérieur, **caractérisé en ce que** les entretoises transversales (8) sont montées individuellement à l'extérieur de l'espace d'enrobage, et peuvent être déplacées vers le haut et vers le bas indépendamment les unes des autres.

2. Dispositif selon la revendication 1, **caractérisé en ce que** des disques à came (16) sont prévus pour le mouvement ascendant et descendant de chaque entretoise transversale (8), qui effectuent une amplitude de vibration lors de chaque rotation, la courbe d'excentrique entre les points de plus grande et de plus petite amplitude comportant un ressaut (16a).

3. Dispositif selon la revendication 2, **caractérisé en ce que** les disques à came (16) pour une entretoise transversale (8) sont disposés sous le guidage de retour de la bande à grille (2), et sont reliés par un arbre d'entraînement (18) commun, et
**en ce que** des poussoirs (9, 10) sont disposés entre les entretoises transversales (8) et les disques à came (16), qui transmettent la course prédéterminée par la courbe de came à l'entretoise transversale associée.

4. Dispositif selon la revendication 3, **caractérisé en ce que** les poussoirs (9, 10) sont agencés en tant que système télescopique à ressort (11), ce dernier étant tendu lors du mouvement ascendant, et se détendant lors du mouvement descendant afin de renforcer l'impact.

5. Dispositif selon l'une ou plusieurs des revendications précédentes, **caractérisé en ce que**, pour le réglage de l'amplitude, il est prévu des barres de réglage (20) s'étendant perpendiculairement aux entretoises transversales (8), sur lesquelles frappent les entretoises transversales lors de leur mouvement descendant, et qui peuvent être déplacées en direction de la course de vibration.

6. Dispositif selon la revendication 5, **caractérisé en ce que** des plaques de percussion (13) pour les entretoises transversales (8) sont fixées sur les barres de réglage (20).

7. Dispositif selon la revendication 5 ou 6, **caractérisé en ce que** les barres de réglage (20) peuvent être déplacées par l'intermédiaire de poussoirs de déplacement (21) au moyen de disques à came (22).
